Europäisches Patentamt

European Patent Office

Office européen des brevets

(19)

(11) Publication number: **0 477 883 A2**

# EUROPEAN PATENT APPLICATION

(12)

(21) Application number: **91116288.1**

(22) Date of filing: **25.09.91**

(51) Int. Cl.⁵: **H02N 1/10**

(30) Priority: **28.09.90 KR 1555290**

(43) Date of publication of application:
**01.04.92 Bulletin 92/14**

(84) Designated Contracting States:
**ES FR IT**

(71) Applicant: **GOLDSTAR CO. Ltd.**
**20, Yoido-Dong, Youngdungpo-Gu**
**Seoul(KR)**

(72) Inventor: **Lee, Min-Ki**
**4-103, Unah Atp., Kaumjung-Dong**
**Changwon City, Kyungsangnam-Do(KR)**

(74) Representative: **Cohausz & Florack**
**Patentanwälte**
**Postfach 14 01 61 Schumannstrasse 97**
**W-4000 Düsseldorf 1(DE)**

(54) **Auto voltage selector of inverter power supply.**

(57) An inverter power supply circuit for automatically selecting AC 110/220 voltage inputs. An automatic voltage selector controls a number of relay contacts such that two primary coils of a high frequency and high voltage transformer in a power exciting circuit are connected in parallel to each other when AC 110 voltage input is supplied; and the two primary coils are connected in series to each other when AC 220 voltage input is supplied. The output of a microprocessor is compared with the output of an input current sensor so as to provide the output therefrom to the power exciting circuit.

FIG.2

FIELD OF THE INVENTION

The present invention relates generally to an inverter power supply circuit of a microwave oven, and particularly although not exclusively to an automatic voltage selection inverter power supply circuit in which AC 110/220 voltage inputs are automatically selected.

BACKGROUND OF THE INVENTION

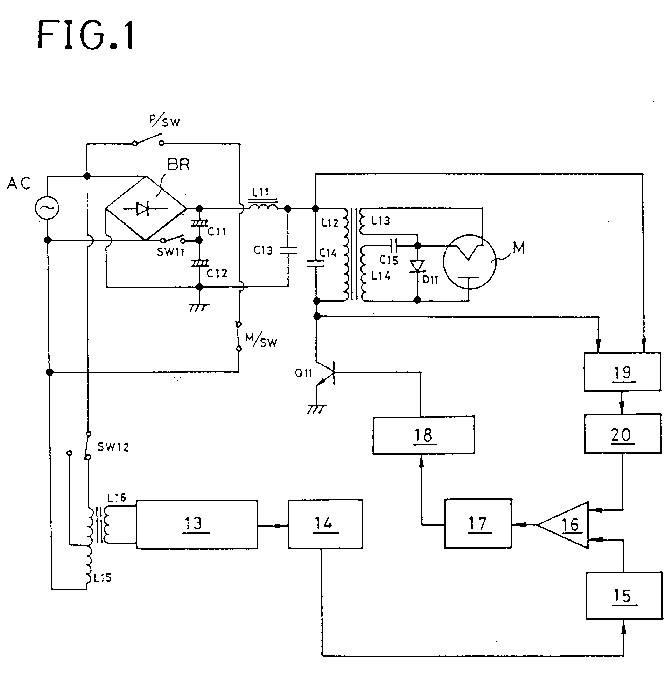

With reference to Fig. 1, a typically known inverter power supply circuit includes a bridge diode BR for full-wave rectification connected to AC voltage input terminals, and smoothing condensers C11, C12 connected in series between the output terminals of the bridge diode BR. Further, a choke coil L11 and a smoothing condenser C13 are connected to the output terminals of the bridge diode, a connection node thereof being connected to a primary coil L12 of a high frequency and high voltage transformer. Another terminal of the primary coil L12 is connected to the collector of a power transistor Q11.

Moreover, a resonance condenser C14 is connected between the terminals of the primary coil L12, and a secondary coil L14 of the high frequency and high voltage transformer is connected to a magnetron M by way of a voltage multiplying condenser C15 and a high voltage diode D11. A switch SW11 for switching AC 110/220 voltage inputs is connected between an input terminal of the bridge diode BR and a connection node of the smoothing condensers C11, C12. In addition, a switch SW12 and the primary coil L15 of a low frequency transformer are connected in series between the AC input terminals. A secondary coil L16 of the low frequency transformer is connected to a microprocessor 13 to apply a control signal to a reference establishing circuit 15 via a power supply separating circuit 14. Further, both ends of the primary coil L12 of the high frequency and high voltage transformer are connected to a trigger circuit 19 to control a triangular pulse generator 20. A comparator 16 compares the output of the triangular pulse generator 20 with the output of the reference establishing circuit 15 and the comparison signal therefrom is applied to the base of the power transistor Q11 through a delay circuit 17 and a driving circuit 18, to thereby turn-on/off the power transistor Q11. Further, in the drawing, a letter P/SW represents a first switch which is adapted to be turned off when the door of the microwave oven is opened, while another letter M/SW a monitor switch for sensing switching operation of the first switch.

In such a conventional inverter power supply circuit, the switches SW11, WS12 are manually controlled to select a corresponding voltage input, wherein the switch SW11 is turned on for AC 110 voltage input to form a voltage multiplier circuit or is turned off for 220 voltage input to form a bridge full-wave rectification circuit. A smoothed voltage by the choke coil L11 and the smoothing condenser C13 is provided to the primary coil L12 of the high frequency and high voltage transformer. Therefore, a constant voltage will be applied to the primary coil L12, regardless of the AC 110 or 220 voltage inputs.

In this case, a transistor having large current and high withstand voltage characteristics is used for the power transistor Q11. Further, the microprocessor 13 provides the power supply separating circuit 14 with the control signal so as to separate the power supply voltage and the comparator 16 is provided with a reference voltage through the reference establishing circuit 15.

This reference voltage is compared at the comparator 16 with the output signal from the triangular pulse generator 20 and the result comparison signal output is applied to the power transistor Q11 through the delay circuit 17 and the driving circuit 18.

However, such conventional inverter power supply circuit uses great power supply and accordingly the capacity of the smoothing condensers must be also large. Furthermore, a transistor having large current and high voltage characteristics must be used for the power transistor, thereby resulting in the high cost of the products as well as the great bulk of the products. In particular, since a manual switching method of the power supply voltage is employed, not only operation of the product is inconvenient but also the product itself is apt to cause breakage when used carelessly.

SUMMARY OF THE INVENTION

It is accordingly an object of the present invention to provide an inverter power supply circuit for automatically selecting AC 110 or 220 voltage inputs, thereby serving a user's convenience.

It is another object of the present invention to provide a compact inverter power supply circuit which generates a stable output.

According to an aspect of the present invention, an inverter power supply circuit for automatically selecting voltage inputs includes: rectification means for rectifying AC voltage input and removing therefrom noise components; an automatic voltage selecting means for controlling a plurality of relay contacts in response to level of the AC voltage input; an input current sensor for sensing current flow through an AC input terminal; a microprocessor for sensing a voltage induced at a secondary coil of a low frequency transformer according to the level of the AC voltage input, to thereby generate a control signal; a power separating circuit for separating a predetermined power supply from the output of the microprocessor; power exciting means for controlling voltages induced to a high frequency and high voltage transformer and driving a magnetron, in response to the automatic voltage selecting means; and driving means for driving the power exciting means.

BRIEF DESCRIPTION OF THE DRAWINGS

For a better understanding of the invention and to show how the same may be carried into effect, reference will now be made, by way of example, to the accompanying diagrammatic drawings, in which:

Fig. 1 is a circuit diagram of a conventional inverter power supply circuit;

Fig. 2 is a circuit diagram of an automatic voltage selection inverter power supply circuit according to the present invention;

Fig. 3 is a wiring diagram of a power exciter of the circuit in Fig. 2 when AC 220 voltage input is applied; and

Fig. 4 is a wiring diagram of the power exciter of the circuit in Fig. 2 when AC 110 voltage input is applied.

DETAILED DESCRIPTION OF THE PREFERRED EMBODIMENT

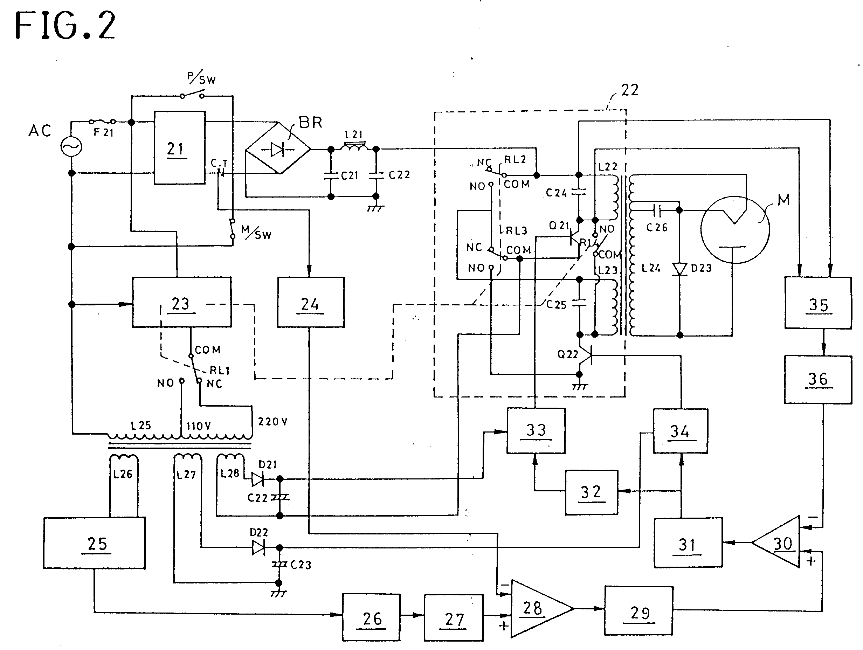

Referring to Fig. 2, a fuse F21 is connected between the AC voltage input and a noise filter 21. The output of the noise filter 21 is then applied to a bridge diode BR. Further, a current transformation circuit CT is connected between the noise filter 21 and the bridge BR to thereby provide the output thereof to an input current sensor 24. Between the output terminals of the bridge BR, a smoothing choke coil L21, condensers C21, C22 are connected in series and parallel, and a connection node by the smoothing choke coil L21 and the condenser C22 is connected to a primary coil L22 of a high frequency and high voltage transformer. In addition, the AC voltage passed through the fuse F21 is applied to an automatic voltage selector 23 which selects, by means of relay contact RL1, an AC 110 voltage terminal NO or an AC 220 voltage terminal NC of a primary coil L25 of a low frequency transformer.

Furthermore, a secondary coil L26 of the low frequency transformer is connected to a microprocessor 25 and other secondary coils L27, L28 produce DC voltages in association with diodes D22, D21 and condensers C22, C23, respectively and the respective DC voltages are applied to driving circuits 33, 34. The microprocessor 25 controls a power separating circuit 26 and a digital-to-analog converter 27. A negative feedback amplifier 28 compares and amplifies the outputs of the input current sensor 24 and the digital-to-analog converter 27 to apply the amplified signal to an integrating circuit 29. Both ends of the primary coil L22 of the high frequency and high voltage transformer are connected to the inputs of a trigger circuit 35 of which output is applied to a triangular pulse generator 36. Then, a comparator 30 compares the output of the triangular pulse generator 36 with the output of the integrating circuit 29 to apply the comparison signal output to a delay circuit 31. The output of the delay circuit 31 is supplied to a driving circuit 34 and at the same time, to a driving circuit 33 through a power separating circuit 32.

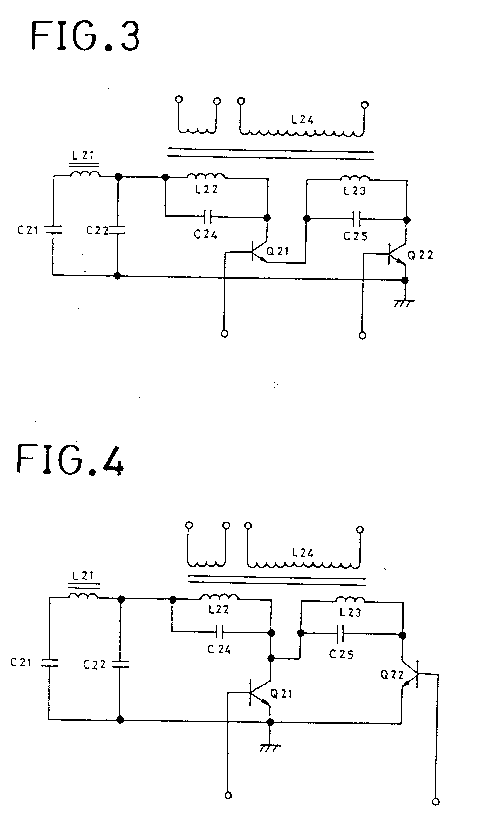

In the meantime, in response to operation of the automatic voltage selector 23, the relay contacts RL2, RL3, RL4 are adapted to control the primary coil L22, L23 of the high frequency and high voltage transformer connected in parallel to condensers C24, C25 respectively. The outputs of the respective driving circuits 33, 34 drive the power transistors Q21, Q22 so as to control the current flow of the primary coils L22, L23 respectively. The secondary coil L24 of the high frequency and high voltage transformer is connected to a magnetron M in association with a voltage multiplying condenser C26 and a high voltage diode D23. In this way of coupling the circuitry, a power exciter 22 is provided and in Fig. 4, the wiring diagram of the power exciter 22 is illustrated when AC 110 voltage input is applied thereto. In addition, a letter P/SW represents a first switch which is adapted to be turned off when the door of the microwave oven is opened, while another letter M/SW a monitor switch for sensing switching operation of the first switch.

In such constructed inverter power supply circuit for automatically selecting input voltage in accordance with the present invention, it should be noted that the respective relay contacts RL1-RL3 are connected to the terminals NC thereof when AC 220 voltage is supplied, while the respective relay contacts RL1-RL3 are connected to the terminals NO thereof when AC 110 voltage is supplied, in response to the output of the automatic voltage selector 23.

In operation, the microprocessor 25 controls the power separating circuit 26 to separate the power supply and the digital-to-analog converter 27 generates an analog signal to the negative feedback amplifier 28 at which the output of the digital-to-analog converter 27 is compared with the output of the input current sensor 24. The comparison signal output from the negative feedback amplifier 28 is integrated by the integrating circuit 29 and applied as a control signal to a non-inverse input terminal of the comparator 30. It can be appreciated from the foregoing that if the output voltage level of the input current sensor 24 is lower than that of the digital-to-analog converter 27, the output voltage of the negative feedback amplifier 28 becomes the logic high and accordingly, the output voltage of the integrating circuit 29 also increases gradually.

Thus, if the control voltage applied to the non-inverse input terminal of the comparator 30 increases, the output of the comparator 30 which receives the output of the triangular pulse generator 36 through the inverse input terminal becomes such that the period of the logic high state is relatively longer than that of the logic low state. Of course, this period of the logic high state is proportional to the turn-on period of the power transistors Q21, Q22.

The output signal of the comparator 30 is delayed at the delay circuit 31 by about 1-20 and applied to the power separating circuit 32 and the driving circuit 34.
The output from the power separating circuit 32 is then provided to the driving circuit 33. Then, the outputs of the driving circuits 33, 34 are respectively applied to the power transistors Q21, Q22 to turn on/off the transistors. Herein, it should be noted that the power separating circuit 32 is additionally used for controlling power transistor Q21, because the emitter of the power transistor Q21 is not grounded as shown in Fig. 3 while AC 220 voltage input is provided thereto. However, when AC 110 voltage input is supplied, since the emitters of the power transistors Q21, Q22 are all grounded as shown in Fig. 4, it is not necessary to separate the power supply.

In this way, when AC 220 voltage input is supplied, the relay contact RL4 is opened in response to the output of the automatic voltage selector 23; therefore, as shown in Fig. 3, a first set of the coil L22, condenser C24 and transistor Q21 and a second set of the coil L23, condenser C25 and transistor Q22 are connected in series to excite the power. On the other hands, when AC 110 voltage input is supplied, the relay contact RL4 is connected to the terminals NO; therefore, as shown in Fig. 4, the first set of the coil L22, condenser C24 and transistor Q21 and a second set of the coil L23, condenser C25 and transistor Q22 are connected in parallel to excite the power.

As shown in the foregoing description, the invention circuit selects the relay contacts automatically according to AC 100 or 220 voltages and controls the input current to be constant by use of a negative feedback amplifier to thereby serve a user's convenience and provide stable, correct output. Moreover, according to AC 110/220 voltage inputs, the power exciter is connected in series or in parallel, so that the great power control is possible as well as the operation of the circuit is stable. In particular, because the voltage multiplying rectification condensers are not used, the product can be made small. Furthermore, if a walk coil is used in place of the high frequency transformer in a microwave induction heating cooker, the above described effect can be obtained.

While the invention has been particularly shown and described with reference to a preferred embodiment, it will be understood by those skilled in the art that modifications in detail may be made without departing from the spirit and scope of the invention.

**Claims**

1. Auto voltage selector of inverter power supply comprising:
   rectification means for rectifying AC voltage input and removing therefrom noise components;
   an automatic voltage selecting means for controlling a plurality of relay contacts in response to level of the AC voltage input;
   an input current sensor for sensing current flow through an AC input terminal;
   a microprocessor for sensing a voltage induced at a secondary coil of a low frequency transformer according to the level of the AC voltage input, to thereby generate a control signal;
   a power separating circuit for separating a predetermined power supply from the output of the microprocessor;
   power exciting means for controlling voltages induced to a high frequency and high voltage transformer and driving a magnetron, in response to said automatic voltage selecting means; and
   driving means for driving said power exciting means.

2. An inverter power supply apparatus according to Claim 1,
   wherein at least two primary coils of said high frequency and high voltage transformer are connected in parallel to each other when AC 110 voltage input is supplied;
   wherein said primary coils of said high frequency and high voltage transformer are connected in series to each other when AC 220 voltage input is supplied.

3. An inverter power supply apparatus according to Claim 1, wherein said driving means comprises:

a digital-to-analog converter for converting output voltage of said power separating circuit into analog signal;

an amplifier for comparing output of said input current sensor with output of said digital-to-analog converter and amplifying the comparison signal;

an integrating circuit for integrating output of said amplifier;

a comparator for comparing output of said integrating circuit with output of a triangular pulse generator;

a delay circuit for delaying output of said comparator; and

a driving circuit for driving said power exciting means in response to output of said delay circuit.

# FIG.1

# FIG.2

EP 0 477 883 A2

# FIG.3

# FIG.4